# EUROPEAN PATENT APPLICATION

(11) **EP 1 016 508 A1**
(43) Date of publication of application: **05.07.2000**
(21) Application number: 98945668.6
(22) Date of filing: 10.09.1998
(51) Int. Cl.: B29B 17/02, C08J 11/16, B02C 23/34

(54) **METHOD FOR RECYCLING RUBBER-CONTAINING ARTICLES, PARTICULARLY REINFORCED ARTICLES SUCH AS THE TIRE CASINGS OF VEHICLES, AND DEVICE FOR REALISING THE SAME**

(30) Priority: 15.09.1997 RU 97115873; 16.03.1998 RU 98105435
(71) Applicant: Otkrytoe Aktsionernoe Obschestvo "Troitskaya Tekhologiskaya Laboratoriya", Moskovskaya obl., 142092; (RU)
(72) Inventor: BONDARENKO, Alexandr Vladimirovich, Moskovskaya obl., 142092 (RU); DANSCHIKOV, Evgeny Vladimirovich, Moskovskaya obl., 142092 (RU); LUCHNIK, Igor Nikolaevich, Moscow, 121343 (RU); RYAZANOV, Alexandr Vasilievich, Moskovskaya obl., 142092 (RU); CHUIKO, Sergei Vasilievich, Moscow, 127476 (RU)
(74) Representative: Patentanwälte Zellentin & Partner
(86) International application number: RU9800282
(87) International publication number: WO9914026

(57) **Abstract**

The present invention relates to a method for recycling rubber-containing articles and more particularly reinforced articles such as the tire casings of vehicles. This method comprises placing the article in a chamber in which an ozone-containing gas is fed, and applying mechanical deformation forces on said article. The ratio between the ozone consumption value for recycling the article and the power consumption value for generating the mechanical forces is kept within an interval of 0.02-2 g/watt per hour This invention also relates to a device for realising this method, wherein said device comprises a working chamber, a system for feeding an ozone-containing gas therein as well as a system for mechanically deforming the articles to be recycled. The deformation system is made in the shape of two or more members, wherein one member is capable of rotation relative to the second and comprises protruding working organs which are arranged so as to engage the articles to be recycled.

## Description

The present invention relates to disposal and recycling of scrap of rubber products, for example, spent tires, wastes of RTI production, etc.

Economic expediency of recycling of used rubber products is determined by their ability to retain properties of material that permits to use waste rubber products in producing new construction and technological materials. Therefore, processing of waste rubber products not only reduces an environmental pollution, but also allows to recycle the valuable materials. So, the development of methods of processing of rubber products and recycling units is urgent and very important problem.

The most economically efficient way of disposal is based on the separation of dispersed vulcanized rubber - rubber crumb, metal and fabric reinforcement materials - from the waste rubber products. Such processing and qualitative separation of materials are very difficult technological problems which have not been solved by any economically efficient way yet.

Traditional mechanical methods of processing (Drozdovskiy V.F. Production of dispersed vulcanized rubber. - "Caoutchouc and Rubber", 1993, No.5, pp.44-50) are characterized by significant power consumption what does not allow to perform efficient processing of rubber products reinforced by metal (for example, tires reinforced by metal cord) and to obtain secondary raw material of high quality - rubber crumb. Overall disadvantage of mechanical methods is enormous air pollution during rubber destruction under heating.

Processing under cryogenic temperatures (Great Britain Patents No. 1438 278, B9A, 1973 and No. 1334718, C3E, 1973) is connected with significant power consumption required for production of sufficient amount of cooling agent. All these requires the complicated technical problems to be solved and doesn't allow to make quality separation of reinforcement elements. During the heating of crumb to the room temperature pollution problems appear with extraction of harmful light pollutants.

Before we have proposed the method of processing of rubber products (RF Patent No.2060882, USA Patent No.5,492,657). This method allowed to perform efficient and quality processing with minimum power consumption and providing high quality of rubber separation from reinforcement elements and production of quality secondary raw material. The method described in the RF Patent No.2060882 and selected as a prototype of the present invention provides processing of reinforced rubber products in operation chamber filled with ozone containing gas through application of deforming forces. This process requires the deformation level to be maintained not less than 1% and ozone concentration in gas medium within the limits from 0,01 to 10%.

This method doesn't allow to realize the optimum modes of processing providing the minimum total power consumption incorporating consumption of energy for deformation forces creation and consumption of energy for ozone production. This is the main disadvantage of the described method. Such optimization can be provided by mechanical action on the products agreed with the chemical action of ozone containing gas.

Rubber crumb is a main result of rubber products processing. Rubber crumb quality characterizes the processing quality. High quality of the produced secondary raw material should be provided by the agreed modes of action on the products being processed, what was not incorporated in the prototype.

Recycling unit for rubber products processing, described in prototype (RF Patent No.2060882) where the means of deformation are located inside the chamber filled with ozone containing gas presents the common unit for the method realization. But this unit doesn't contain means of deformation providing efficient continuous processing of rubber products. This fact forms one of the unit's disadvantages. Used tires represent one of the most distributed types of waste rubber products to be processed. Creation of specific units for their processing through the invented efficient method is one more urgent problem.

The present invention is oriented to optimization of the methods of rubber products processing, in particular, reinforced products, including tires; improvement of the quality of processing and the quality of produced secondary raw material - rubber crumb; construction of units for efficient processing of rubber products, in particular reinforced materials, including and in the first turn - used tires.

This method is based on the principle of destructive mechanical and chemical reaction used in the prototype (RF Patent No.2060882). This method provides action of ozone containing gas (usually enriched by air ozone) on elastomer (rubber) under moderate mechanical deformation of the last. The product destruction begins and develops along the micro-defects (micro-cracks) which exist practically in all products, especially in composites (reinforced) after their use. Mechanical deformation allows to expand micro-cracks facilitating ozone penetration and distracting reaction propagation. Reaction of mechanical and chemical destruction is concentrated in the tops of cracks acting as a molecular "zone knife" cutting the product body.

The method of destructive mechanical and chemical reaction can be used for products and materials processing in case they contain polymeric material (Caoutchouc) not resistant to ozone action. Volume contaminator of this material - from 20% and more. Thus, the "rubber product" term used in this invention means the product or material containing not less than 20% of the polymeric material not resistant to ozone action, in particular, elastomer.

In case the products being processed contain other materials - reinforcement elements made of metal, fabric, glass fibers, etc., the mechanical and chemical reaction of "ozone knife" is more intensive on the boarders of connection of these material to elastomer providing efficient and full separation of rubber from these elements.

Total energy required for processing by the method of "ozone knife" is determined by the energy necessary for reaction plus the energy necessary for mechanical destructive forces creation.

Optimization and minimization of energy consumption require coordination of intensity of mechanical and chemical (ozone) action on the material being processed.

More over, the rubber crumb is the main product from rubber products processing. Its high quality and further efficient use require certain conditions to be provided - coordination of relation between ozone consumption, mechanical energy and mass of rubber being processed. These conditions determine the process modes. The modes allow to produce products of high quality in the most efficient way (not energy intensive)/ Obtained particles of polymeric material (rubber) bear the quality of original material and resistant to both mechanical destruction and chemical destruction from oxidation.

The present invention is directed to construction of units for efficient processing of rubber products, including reinforced products and tires, using the described method.

At the same time there were invented some facilities for rubber products processing joined by common condition of use of some (two or more) elements equipped by projecting working bodies (teeth) and moving past each other with the help of power drives. There were determined necessary conditions for relative location and configuration of these elements in relation to each other and products being processed, in particular, tires.
Fig.1 illustrates the parameter areas where the method of "ozone knife" is considered to be the most efficient and expedient in use. These areas are shown in the coordinates of specific consumption of mechanical energy to the unit of mass of rubber being processed (M/P, Wh/kg) and specific consumption of ozone (O/P, g/kg), and denoted as P1, P2 and P3 (necessary mode, the best mode and optimum for most of products, accordingly).
Fig.2 illustrates one of the versions of the rubber products processing units and its use for tires processing.
Fig.3 illustrates another version of the tires processing units.

Detailed investigation of rubber products and materials processing by the mechanical and chemical method of "ozone knife" allowed to determine the optimum modes of the process and production of the processed product of high quality. Intensification of mechanical action and increase in ozone consumption naturally bring to acceleration of processing. But optimization of this process and reduction of total consumption of energy for products processing (per the unit of mass of produced rubber) requires to support certain relations between mechanical and chemical actions on material being processed. In case excessive mechanical action and relative shortage of ozone brings to use mechanical energy in vain and rubber heating. On the other hand, shortage of mechanical deformation makes ozone moleculars to perish on the surface of undeformated rubber not finding sufficient number of activated areas where the extended polymer moleculars can be destroyed. This brings to excessive consumption of ozone and increase in consumption of energy to perform the process.

More over, excessive mechanical forces bring to mechanical destruction of polymeric materials (rubber), and excessive volume of ozone can bring to oxidation destruction. Both these processes deteriorate the final product quality (rubber crumb).

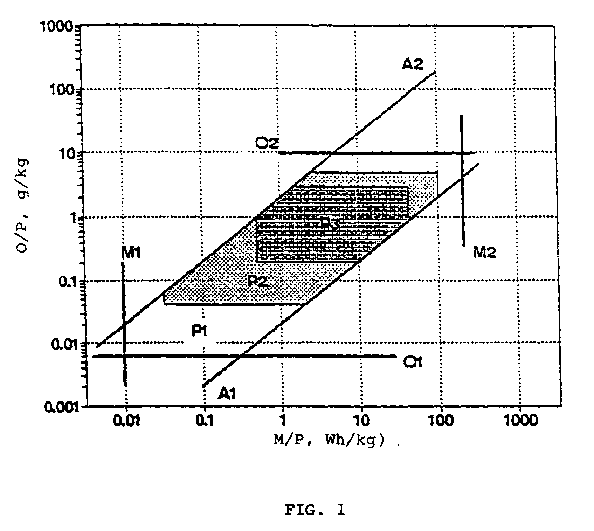

It has been determined that optimum processing requires relation between consumption of ozone and energy used for creation of mechanical forces to be maintained between 0.02 - 2 g/Wh. This area of efficient process is limited by A1 and A2 lines accordingly (see plot in Fig.1).

Specific consumption of ozone and mechanical energy per the unit of mass of rubber being processed are expedient to be supported in defined limits. Volume of ozone should be sufficient to create sufficient number of micro cracks. But excessive ozone is not profitable in the energy aspect and can bring to excessive oxidation destruction of rubber. Relation between mass of used ozone and mass of rubber are to be maintained within the limits 6 x 10⁻⁶ to 10⁻²; in the plot (Fig.1) this area is limited by the lines O1 and O2 accordingly.

Specific consumption of mechanical energy per the unit of mass of rubber should be sufficient for efficient expansion of micro cracks cut by "ozone knife" and not excessive to optimize energy consumption and to escape mechanical destruction of rubber crumb - from 0.01 to 250 Wh/kg - in the plot this area is limited by the lines M1 and M2 accordingly.

So, the area of parameters limited in the plot by the lines A1, A2, O1, O2, M1, M2 and denoted as P1 is an area for the most expedient execution of processing by the "ozone knife" method.

In case of processing of rubber products by the "ozone knife" method, both the number of cracks and speed of expansion depend on mechanical tensions and ozone concentration (volume). So, when changing the mode of processing from the lower left corner of P1 area to its upper right corner both the speed of process and size of crumb determined by characteristic distance between the cracks can be determined.

P2 is the best area where O/P is within the limits 0.04 and 5 g/kg (namely, from 4 x 10⁻⁵ to 5 x 10⁻³ accordingly), and M/P - from 0.2 to 100 Wh/kg.

P3 area located in the O/P limits from 0.2 to 3 g/kg (namely, from 2 x 10⁻⁴ to 3 x 10⁻³, accordingly) and M/P - from 0.6 to 40 Wh/kg (see the plot) is the most optimum area for processing of many products and materials, in particular, for most of typical tires. Catching of reinforcement elements and extraction them from the product is the most efficient method of mechanical and chemical reaction of "ozone knife" in processing of reinforced products, in particular, tires.

As the reinforcement elements are resistant to extension in comparison with rubber products (especially, the steel), it allows to transfer deforming force to the total volume of reinforced products being processed, on the one hand, and to concentrate forces of the boarders of connection of reinforcement cage to rubber what allows to separate reinforcement elements from rubber at the expense of quick mechanical and chemical reaction in these places of tension concentration, on the other hand.

Change in the direction of forces application allows to open all cracks in various areas of the product being processed. In most cases when the typical processing mode is used such change is expedient to make the period from 3 to 300 sec.

In case of tires processing reinforcement elements can be extracted through catching of the board hook connected with the reinforcement fabric cage.

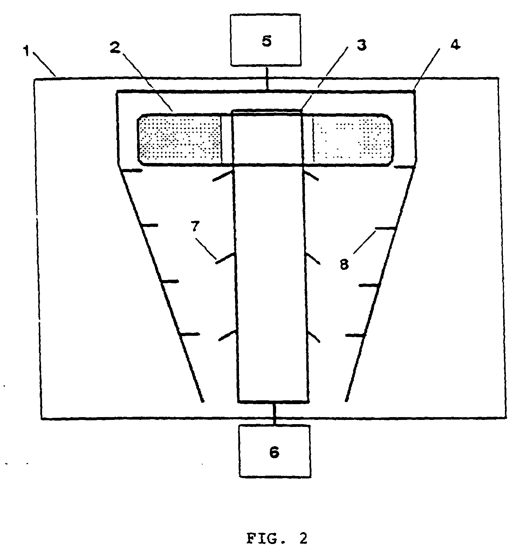

This method of processing of rubber products can be realized through various versions depending on the type of products being processed and purposes of processing. As we can see from Fig.2 the unit can be used, in particular, for processing of the most distributed type of rubber products - tires.

Unit shown in Fig.2 incorporates the treating chamber (1) used for products processing (2), with two elements of deformation system connected with power drives (5,6). Elements (3,4), which can be fitted for guiding the products to be processed, are equipped with operating bodies (7) which can swing in engagement with products processed (for example, tires) and elements of their reinforcement cage, if any. System of ozone containing gas supply, as well as the system of continuous loading and unloading of products are not shown in the Figure.

Products processing takes place in chamber (1). Use of the known technical means or some discharge of gas on chamber volume allow to prevent leakage of ozone containing gas providing the chamber leak-proofness. Internal surface of chamber (1) should be made of ozone resistant materials, incorrosive under ozone action, for example, stainless steel, Al, fluoroplastic, polyethylene, etc.

Products (tires in Fig.2) are subjected to deformation with the help of elements (3,4) arranged in the chamber. These elements move past each other activated by power drives (5,6). At least two elements are required to activate, what you can see in Fig.2. Introduction of additional elements can allow to optimize the process of treatment of specific types of products. The unit can be activated by one drive connected with at least one of the named elements and providing its movement past other elements. Fig.2 illustrates the version of use of two power drives. This version provides various versions of relative movement of elements but it is not compulsory one. Electric engines, hydrocylinders or pneumatic cylinders can be used as power drives (5,6). They can be installed inside or outside the treatment chamber (1). In the last case, power drives transfer the forces to the deformation unit elements through the chamber sealed inputs (not shown in the Figure).

One of the elements can be equipped with projecting working heads which can catch the products being processed. These working heads allow to increase efficiency of required deformation and transportation of products. Such working heads (7,8) of the elements (3,4) of deformation units can be made in the form of teeth, tongues, stops, etc. At least one of the elements should provide catching of material being processed. In case of processing of reinforced products, for example, tires shown in Fig.2, it is advantageous to catch the elements of reinforcement cage of the product by the working heads (for example, textile cord of tire). Movement of one of the elements, activated by power drive, will extract reinforcement elements from the product making the process of the rubber product dispersion more efficient, as it was mentioned before in the processing method description. In accordance with the method used the translation and reverse movement of one of the elements (3,4) shown in the version of the unit realization (see Fig.2) in expedient to perform with the period from 3 sec. to 5 min., changing direction of movement on the element, and, accordingly, direction of application of mechanical forces.

Guiding elements (3,4) shown in Fig.2 form the constricting working gap. Wide part of the gap accepts the products to be processed (for example, tire or other large fragments). It is expedient to deliver the tires co-axially with the elements (3,4). Translation and reverse movement of one of the elements shown in Fig.2 provides deformation of the product in total and its transportation to the narrow part of the working gap.

Other versions of relative movement of the elements and transportation of products to the narrow part of The working gap are possible to use. For example, the similar reverse and translation movement of the elements can be performed in the lateral direction to The narrow part of the working gap in the unit known as jawbreaker. The units can be constructed with power drives providing rotating or ring motion of one of the elements past another. In such case the gap should be located between the moving (rotating) element and stationary elements; it can be realized through the ring gap narrowing along the rotation direction, or, for example, as the gap between the moving elements of conveyer type and the surface of stationary element.

The products can be supplied to the narrow part of the working gap by catching them by the projecting working heads of the element or by direct supply (pushing) in the gap when one of the elements is executed in the form of plunger. Weight of products can be used in such cases of supply; direction of the narrow part of the working gap should adequately lined.

At least one of the elements in such unit (Fig.2) should be arranged on the external side of tires (4). The second element can be located on the external side of tires (see Fig.2) or inside the tires being processed. In the last case the element (3) is expedient to be equipped with the working heads (7) of tooth type to provide catching of the board hook. The teeth (7) catch the tire board hook connected with the reinforcement textile cage. This provides extraction of the total cage from the tire material held by the response elements (4).

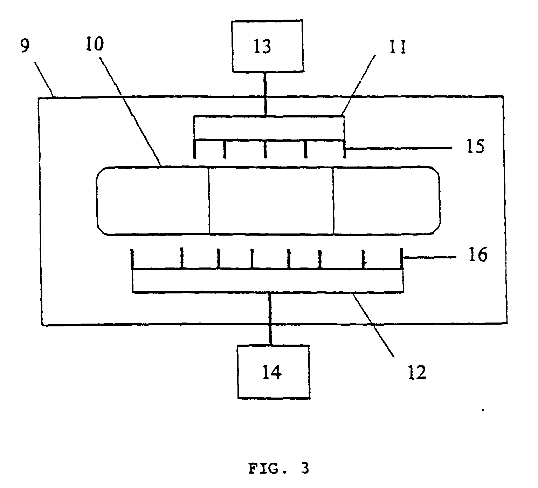

Another version of the tires processing unit realization is shown in Fig.3. This unit incorporates the treating chamber (9) used for products processing (10), with two elements of deformation system (11,12) connected with power drives (13,14). Elements (11,12) are equipped with operating bodies (15,16). System of ozone containing gas supply, as well as the system of continuous loading and unloading of products are not shown in the Figure.

Products (tires (10) in Fig.3) are subjected to deformation with the help of elements (11,12) arranged in the chamber. These elements (for example (11)) move one after another (12) activated by the power drive (13).

At least one of the elements is required to be equipped with projecting working heads. Such working heads (15,16) of the elements (11,12) can be made in the form of teeth, tongues, stops, etc. When pressing the product between the elements (11,12) the teeth provide significant local deformation and destruction of the product material. In such case the teeth of one of the elements (for example, teeth (15) of the element (11)) will come dose to the respond (support) element (12) and can punch material.

The elements can be equipped with openings located in such a way to provide more deep punching of material. These openings provide more close approach of the elements, more efficient deformation and processing.

Conical teeth makes deformation more efficient. When the teeth become wider in the places of contact with the means of deformation the punching will be accompanied by additional deformation of material in the direction lateral to the direction of teeth. It provides the processing acceleration.

When processing the reinforced products, for example, tires shown in Fig.3, their punching by the conical teeth will bring to separation of the reinforcement cage (for example, textile cord in tire). Deformation will be transferred to the product through the reinforcement cage. This accelerates the process of destruction and dispersion of the rubber material in total.

More over, the process of processing and more efficient extraction of the rubber material from reinforcement bases, if any, can be accelerated through provision of additional motion of one of the elements in the direction perpendicular to the direction of compression. As we can see from Fig.3 such element (12) motion can be activated by the power drive (14). This motion can be performed in the form of translation and reverse motion with the period equal to the lap between the teeth. Another possible version of realization of additional motion of the support element in seen in its rotation past the second element. As a rule, the angle of rotation not more than 90° is sufficient for efficient processing of most of products.

Tire of ring form can be efficiently processed by the means of deformation executed in the form of two sets of ring shaped teeth arranged in such order when one set can go through the second. The sets executed in the form of rings (11,12 in Fig.3) allow the teeth (15) to go through internal hole of the ring (12), and the teeth (16) - to external side of the ring (11), accordingly. These tooth shaped rings compress the tire and the teeth punch the tire material. Ring (11) engaged with the board hook of the tire will be pushed in ring (12). This will bring to the tire reinforcement cage tension between the tooth rings and its efficient extraction from rubber.

One of the sets (11) 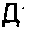 1 is expedient to be selected from 1.1 x 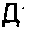 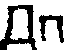 oc to 1.4 x 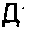 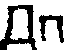 oc, where 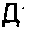 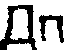 oc - inner opening diameter of tire. It provides reliable engagement of teeth (15) with board hook of tire. Another set (12) 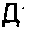 2 is expedient to be selected from 1.2 x 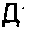 1 to 0.9 x 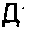 _{BH}, where 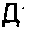 _{BH} - outer opening diameter of tire. It provides reliable engagement of teeth (16) with tire protector. Sufficient rate of power drive should be provided to perform efficient tension of tire reinforcement cage. It should constitute not less than the strings of reinforcement cage from one board hook to another.

It is expedient to rotate one of the ring teeth sets ((12) in Fig.3) around another hook with the help of power drive to accelerate processing. As a rule, it is sufficient to use the angle of rotation not more than 30° (in any case not more than 90°).

Units shown in Fig.2 and Fig.3 are only the examples used for realization of the named invention expedient for processing of reinforced products and most efficient for tires recycling.

This method of processing does not require to construct any unique units which can not be constructed on the present level of technological development. Application of this method and rubber (in particular, tires) processing units allow to find successful solution of the problem of utilization of rubber products wastes and allows to provide efficient and ecologically unpolluted recycling of rubber and reinforcement materials.

### Used Literature

1. Drozdovskiy V.F. Production of dispersed vulcanized rubber. - "Caoutchouc and Rubber", 1993, No.5, pp.44-50.
2. Patents of Great Britain No.1438278, B2A, 1973, No.1334718, C3E, 1973.
3. Danschikov E.V., Luchnik I.N., Ryazanov A.V., Chuiko S.V. RF Patent No.2060882 of September 17, 1992.
4. Danschikov E.V., Luchnik I.N., Ryazanov A.V., Chuiko S.V. USA Patent No.5,492,657 (issued at Feb. 20, 1996)

## Claims

1. **METHOD OF PROCESSING OF RUBBER PRODUCTS, in particular reinforced and tires:** the product is located in the chamber, ozone containing gas is delivered to the chamber and deforming mechanical forces are applied to the product, differs in the fact that **relation between ozone consumption for product processing and energy consumption for creation of mechanical loads is within the range (0.02-2) g/W*h.**

2. The method of p.1 differs in the fact that **relation of ozone consumption for products processing (O) to mass of rubber being processed (P) is between 6*10**^{**-6**} **and 10**^{**-2**}**.**

3. The method of p.1 or p.2 differs in the fact that **relation of energy consumption for creation of mechanical loads (M) to mass of rubber being processed (P) is between (0.01-250) W*h/kg.**

4. The method of p.1 or p.2 or p.3 differs in the fact that **mechanical loads are applied through engagement with reinforcement element and its extraction from rubber material to be distracted.**

5. **UNIT FOR RUBBER PRODUCTS PROCESSING, including reinforced materials and tires,** contain chamber, device for ozone containing gas supply and devices for mechanical deformation of products being processed, main difference: **deformation device is made of at least two elements one of which can move past another and equipped with projecting working heads to catch the products being processed.**

6. The unit of p.5 differs in the fact that **elements of deformation guide the product being processed and one of the elements can move past another.**

7. The unit of p.6 differs in the fact that **guiding elements form the conical working gap and executed in the way when the product being processed moves to the narrower part of the working gap.**

8. The unit of p.5 and p.6 differs in the fact that **guiding elements form the system oriented co-axially with tires supplied for processing with one of the sets installed from external side of tires.**

9. The unit of p.8 differs in the fact that **guiding elements are installed both from the external and internal sides of tires with the guiding elements arranged inside the tires is equipped with teeth providing engagement with the tires board hook.**

10. The unit of p.5 differs in the fact that **at least on of the elements of deformation device can perform translation and reverse motion in the direction to another element.**

11. The unit of p.10 differs in the fact that **at least one of the elements has one or more holes providing the projecting working heads of the second element to penetrate these holes.**

12. The unit of p.11 or p.12 differs in the fact that **deformation device is made in the form of two ring shaped tooth sets arranged in the way which allows one of the sets to go through the inner hole of the second one.**
